# EUROPÄISCHE PATENTANMELDUNG

(11) **EP 4 778 789 A1**
(43) Veröffentlichungstag der Anmeldung: **22.07.2026**
(21) Anmeldenummer: 25209695.3
(22) Anmeldetag: 20.10.2025
(51) Int. Cl.: B60R 13/08

(54) **VERFAHREN ZUR THERMISCHEN ISOLATION EINER WAND**

(30) Priorität: 16.01.2025 DE 102025101382
(71) Anmelder: Bürstner GmbH & CO. KG, 77694 Kehl (DE)
(72) Erfinder: EN-NAJMI, Youssef, 77704 Oberkirch (DE)
(74) Vertreter: Müller Schupfner & Partner Patent- und Rechtsanwaltspartnerschaft mbB (Muc)

(57) **Zusammenfassung**

Es wird ein Verfahren zur thermischen Isolation einer Wand (220), insbesondere eines Freizeitfahrzeugs, vorgeschlagen, aufweisend:
Bereitstellen einer Innenverkleidung (200) für eine Innenseite einer Fahrzeugwand (220), wobei ein Teilbereich einer räumlichen Kontur der Innenverkleidung (200) einer räumlichen Kontur der Innenseite der Fahrzeugwand (220) angepasst ist; Beschichten zumindest eines Teils einer Rückseite (202) der Innenverkleidung (200) und/oder zumindest eines Teils der Innenseite der Fahrzeugwand (220) mit einem Schaumstoff (210), wobei das Beschichten durch Auftragen des Schaumstoffs in fließfähigem Zustand erfolgt, wobei der Schaustoff insbesondere aus zwei Komponenten gebildet wird; und Montieren der Innenverkleidung (200) an der Innenseite der Fahrzeugwand (220), wobei insbesondere ein Zwischenraum zwischen zumindest einer Teilfläche der Rückseite der Innenverkleidung (202) und der Innenseite der Fahrzeugwand (220) mit dem Schaumstoff (210) vollständig gefüllt ist.

## Beschreibung

Die vorliegende Erfindung betrifft ein Verfahren zur thermischen Isolation einer Wand, insbesondere eines Freizeitfahrzeugs, eine Innenverkleidung für eine Innenwand eines Freizeitfahrzeugs, ein Freizeitfahrzeug, und eine Verwendung eines Polyurethansystems zum Aufschäumen eines elastischen Schaumstoffs bei einem Beschichten einer Rückseite einer Innenverkleidung.

Beispielsweise können Kastenwagen oder Lieferwagen Kraftfahrzeuge sein, die ein Laderaum aufweisen, der typischerweise nur geringfügig oder gar nicht verkleidet ist, sodass insbesondere der Laderaum durch Wände aus Kraftfahrzeugblech begrenzt wird. Ein solcher Kastenwagen kann als Basisfahrzeug verwendet werden, um es zu einem bewohnbaren Freizeitfahrzeugs oder Fahrzeug mit Wohnfunktionen auszubauen.

Dazu kann eine Innenseite der Fahrzeugwand mit einer Innenverkleidung, bzw. mit einem Wandverkleidungselement, versehen werden, um die Wände aus Kraftfahrzeugblech thermisch und/oder akustisch zu isolieren. Typischerweise weisen die Innenseiten bzw. Innenwände des Kraftfahrzeugs geformte Blechkonstruktionen als Träger oder Streben, bzw. Holme oder Traversen, auf, die von der Innenseite mit dem Kraftfahrzeugblech mechanisch gekoppelt sind, um insbesondere die Stabilität des Aufbaus, bzw. des Laderaums zu verbessern. Daher weist die Innenseite der Fahrzeugwand eine räumliche Kontur auf, die insbesondere durch die Anordnungen und Formen der Blechkonstruktionen bedingt ist. Eine räumliche Kontur der Innenverkleidung kann auf einer Vorderseite und einer Rückseite der Innenverkleidung so geformt sein, dass sie zumindest in Teilbereichen der räumlichen Kontur der Innenseite der Fahrzeugwand angepasst ist, um insbesondere ein möglichst großes Volumen des Laderaums trotz der Innenverkleidung zu erhalten.

Für eine akustische und/oder thermische Isolierung wird für einen Ausbau zu einem Freizeitfahrzeug typischerweise in einen Zwischenraum zwischen einem Teilbereich einer Rückseitenfläche der Innenverkleidung und die Innenseite der Fahrzeugwand ein Isolationsmaterial eingebracht. Typischerweise wird ein solches Isolationsmaterial aus Stanzteilen von Isoliermatten individuell gefertigt, um der räumlichen Kontur der Innenverkleidung zu folgen, und muss in den Zwischenraum eingebracht werden. Die große Anzahl von Einzelteilen resultieren in einer großen Anzahl von Artikelnummern, die mit entsprechendem Aufwand sortiert und an der Innenwand angebracht werden müssen. Daraus resultiert ein großer Fertigungs-Zeitaufwand für die Isolierung des Zwischenraums. Außerdem resultieren aus der individuellen Fertigung der Stanzteile hohe Kosten.

Die Erfindung beschreibt ein Verfahren zur thermischen Isolation einer Wand, insbesondere eines Freizeitfahrzeugs, eine Innenverkleidung für eine Innenwand eines Freizeitfahrzeugs, ein Freizeitfahrzeug, und eine Verwendung eines Polyurethansystems zum Aufschäumen eines elastischen Schaumstoffs bei einem Beschichten einer Rückseite einer Innenverkleidung, gemäß den Merkmalen der unabhängigen Ansprüche. Vorteilhafte Ausgestaltungen sind Gegenstand der abhängigen Ansprüche sowie der nachfolgenden Beschreibung.

Gemäß einem Aspekt der Erfindung wird ein Verfahren zur thermischen Isolation einer Wand, insbesondere einer Wand im Inneren eines Fahrzeugs, vorgeschlagen, welches die folgenden Schritte aufweist.

In einem Schritt wird eine Innenverkleidung für eine Innenseite der Fahrzeugwand bereitgestellt, wobei ein Teilbereich einer räumlichen Kontur der Innenverkleidung einer räumlichen Kontur der Innenseite der Fahrzeugwand angepasst ist. Die Innenseite der Fahrzeugwand wird im Folgenden auch mit "Innenwand" bezeichnet.

Die Innenverkleidung wird beispielsweise von einem oder mehreren Paneelen gebildet. Die Paneele haben vorzugsweise eine im Wesentlichen plattenartige Form, ggf. mit räumlichen Ausformungen, auch als Kontur bezeichnet. Die Dicke der Paneele beträgt z.B. 1 bis 6 mm. Die räumliche Kontur der Innenverkleidung kann zu einer räumlichen Kontur der Innenseite der Fahrzeugwand korrespondieren, wobei die räumliche Kontur der Innenwand auf geformten Blechkonstruktionen und/oder einer äußeren Form des Fahrzeugs basiert, wobei die Innenwand Träger oder Streben, bzw. Holme oder Traversen, aufweisen kann, die mit dem Kraftfahrzeugblech mechanisch gekoppelt sind, um insbesondere eine Stabilität eines Aufbaus des Fahrzeugs, bzw. eines Laderaums zu verbessern. Dabei kann die räumliche Kontur der Innenverkleidung zu der räumlichen Kontur der Innenseite der Fahrzeugwand so korrespondieren, dass ein freies Volumen im Inneren des Fahrzeugs durch eine Montage der Innenverkleidung möglichst wenig reduziert wird. Die räumliche Kontur der Innenverkleidung kann Plateaus oder Flächen aufweisen, die zumindest in Teilbereichen der Innenverkleidung eben sind, wobei die Plateaus oder Flächen stufenartig mittels Flanken oder Wangen miteinander verbunden sind. Alternativ kann die räumliche Kontur der Innenverkleidung und der Innenseite der Fahrzeugwand zumindest in Teilbereichen auch flach bzw. planar sein. Die räumliche Kontur kann auch für verschiedenen Paneele der Innenverkleidung unterschiedlich sein, d.h. einige können Stufen/Ausbuchtungen aufweisen, während andere flach bzw. planar sind.

Insbesondere kann ein Abstand der Rückseite der Innenverkleidung zu der räumlichen Kontur der Innenseite der Fahrzeugwand, zumindest in Teilbereichen der Rückseite der Innenverkleidung, einen einheitlichen Abstand aufweisen. Die Innenverkleidung kann eine im Wesentlichen einheitliche Dicke aufweisen, z.B. 1 bis 6mm. Die Innenverkleidung kann, insbesondere basierend auf der einheitlichen Dicke, sowohl auf einer Vorderseite als auch auf einer Rückseite die räumliche Kontur der Innenseite der Fahrzeugwand aufweisen. Insbesondere kann die räumliche Kontur der Innenverkleidung vollständig der räumlichen Kontur der Innenseite der Fahrzeugwand angepasst sein. Die Innenwand kann eine zu einer Fahrzeuginnenseite gerichtete Struktur einer Oberfläche der Wände des Kraftfahrzeugs charakterisieren.

Die Innenverkleidung kann einen faserverstärkten Kunststoff aufweisen. Alternativ oder zusätzlich, kann die Innenverkleidung einen thermoplastischen Kunststoff aufweisen, wie beispielsweise einen Kunststoff auf Basis eines Acrylnitril-Butadien-Styrol-Copolymere (Kurzzeichen ABS).

In einem weiteren Schritt wird zumindest ein Teil einer Rückseite der Innenverkleidung und/oder zumindest ein Teil der Innenseite der Fahrzeugwand mit einem Schaumstoff beschichtet. Vorzugsweise wird in jeder Teilfläche der Fahrzeugwand entweder die Innenverkleidung oder die Innenseite der Fahrzeugwand beschichtet, um den Prozess zu vereinfachen. Wenn in einer Teilfläche sowohl die Rückseite der Innenverkleidung als auch die Innenwand mit einem Schaumstoff beschichtet wird, kann eine Schichtdicke des Schaumstoffs auf der Rückseite der Innenverkleidung verschieden oder gleich sein, wie eine Beschichtung auf der Innenseite der Fahrzeugwand. Die Schichtdicke auf der Rückseite der Innenverkleidung und/oder der Innenseite der Fahrzeugwand kann in unterschiedlichen jeweiligen Teilflächen verschieden sein. Die Rückseite der Innenverkleidung ist diejenige Seite, die der Innenseite der Fahrzeugwand zugewandt ist. Die Vorderseite der Innenverkleidung ist diejenige Seite, die dem Fahrzeuginneren zugewandt ist.

Vorzugsweise erfolgt das Beschichten durch ein Auftragen des Schaumstoffs in einer fließfähigen Form, z.B. durch Aufspritzen. Wie weiter unten noch detaillierter beschrieben, wird der Schaumstoff bevorzugt während oder nach der Beschichtung gebildet, indem er flüssig aufgetragen wird und aufgeschäumt wird. Beispielsweise kann der Schaumstoff ein zwei Komponenten (2K) -Weichschaum sein. Die beiden Komponenten des Weichschaums können kurz vor dem Auftragen gemischt werden.

Durch das Beschichten der Rückseite der Innenverkleidung kann gegenüber einer Beschichtung der Innenseite der Fahrzeugwand eine bessere thermische Isolation erreicht werden, da mittels des Schaumstoffs auch Trägerstrukturen der Innenseite der Fahrzeugwand thermisch gegenüber dem Innenraum des Fahrzeugs isoliert werden, die sonst Wärmebrücken in den Innenraum des Fahrzeugs darstellen können. Da die Rückseite der Innenverkleidung strukturiert ist, ermöglicht das Beschichten der Rückseite der Innenverkleidung mit dem fließfähigen Schaumstoff eine einfache Beschichtung, die eine geschlossene Beschichtungsfläche, insbesondere an Flanken der Struktur, aufweisen kann.

In einem weiteren Schritt wird die Innenverkleidung an der Innenseite der Fahrzeugwand montiert, wobei insbesondere ein Zwischenraum zwischen zumindest einer Teilfläche der Rückseite der Innenverkleidung und der, insbesondere korrespondierend geformten, Innenseite der Fahrzeugwand mit dem Schaumstoff vollständig gefüllt ist. Das vollständige Füllen des Zwischenraums zwischen zumindest der Teilfläche der Rückseite der Innenverkleidung und der Innenseite der Fahrzeugwand mit dem Schaumstoff kann bedeuten, dass ein Volumen, welches durch den Zwischenraum zwischen der Rückseite der Innenverkleidung und der Innenseite der Fahrzeugwand und die Teilfläche der Rückseite definiert ist, vollständig mit Schaumstoff gefüllt ist. Dabei kann der zumindest eine Teil der Rückseite der Innenverkleidung und/oder der zumindest eine Teil der Innenseite, der mit dem Schaustoff beschichtet wurde, gleich oder teilweise überlappend mit der Teilfläche der Rückseite der Innenverkleidung sein.

Die Montage der Innenverkleidung kann mittels Verbindungsmitteln erfolgen, die die Innenverkleidung mit der Innenseite der Fahrzeugwand mechanisch koppelt. Der Abstand der Rückseite der Innenverkleidung zu Innenseite der Fahrzeugwand und/oder die Dicke der Schaustoffschicht kann beispielsweise 5 bis 30mm, vorzugsweise 10 bis 20 mm betragen. Eine Schichtdicke des Schaumstoffs auf der Rückseite der Innenverkleidung und/oder auf der Innenseite der Fahrzeugwand, insbesondere vor der Montage, kann eingerichtet sein, den Zwischenraum zwischen der Teilfläche der Rückseite der Innenverkleidung und der Innenseite der Fahrzeugwand mit dem Schaumstoff nach der Montage vollständig zu füllen. Die benötigte Schichtdicke kann durch ein Bestimmen eines Abstands der Rückseite der Innenverkleidung von der Innenseite der Fahrzeugwand unter Berücksichtigung von typischen Toleranzen bestimmt werden.

Die thermische Isolation mit einem Schaumstoff kann zusätzlich zu einer akustischen Isolation, d. h. zu einer akustischen Dämmung und/oder Dämpfung von Schall, führen.

Vorzugsweise ist der Schaumstoff dazu ausgelegt, Formtoleranzen der Innenverkleidung und/oder Formtoleranzen der Innenwand, und/oder Toleranzen der Dicke der Schaumstoffbeschichtung auszugleichen. Insbesondere kann der Schaumstoff vorteilhafterweise Toleranzen der räumlichen Kontur der Innenverkleidung und/oder der räumlichen Kontur der Innenseite der Fahrzeugwand, oder Unregelmäßigkeiten in der Beschichtungsdicke, die beim Beschichten passieren, ausgleichen. Dies kann beispielsweise dadurch erreicht werden, dass der Schaumstoff besonders weich ausgestaltet ist. Insbesondere ist der Schaumstoff so weich, dass dieser nach dem Beschichten/Auftragen noch um ein gewisses Maß, beispielsweise um bis zu 1-2cm, eingedrückt, bzw. komprimiert, werden kann. Dies erlaubt wiederum das Beschichten mit einer gewissen Toleranz in der Beschichtungsdicke, insbesondere das manuelle Beschichten. Die Weichheit kann dadurch erreicht werden, dass der Schaumstoff relativ langsam expandiert oder aushärtet, so dass die Montage der Innenverkleidung erfolgen kann, solange der Schaumstoff noch nicht vollständig expandiert oder ausgehärtet und somit noch weich ist. Alternativ ist der Schaumstoff auch nach vollständigem Expandieren/Aushärten ausreichend weich.

Gemäß einem Aspekt wird vorgeschlagen, dass Hohlräume der geformten Blechkonstruktionen, wie beispielsweise der Träger oder Streben, bzw. der Holme oder der Traversen, zusätzlich mit Schaumstoff gefüllt werden. Dies kann beispielsweise mit einem flüssigen Schaumstoff erfolgen, der in die Hohlräume eingebracht wird, und dort aufschäumt.

Das beschriebene Verfahren kann in vorteilhafter Weise einen Montageprozess der Innenverkleidung optimieren und beschleunigen, weil der Beschichtungsprozess mit dem Schaumstoff, insbesondere auf die Rückseite der Innenverkleidung, auf einem Nebenband vorbereitet werden kann, bevor die eigentliche Montage im Innenraum des Fahrzeugs erfolgt.

Zusätzlich kann vorteilhafterweise eine höhere Prozesssicherheit erreicht werden, da die Anzahl der zu montierenden Einzelteile, wie beispielsweise der unterschiedlichen Stanzteilen von Isoliermatten, reduziert werden, wodurch die Fertigung vereinfacht wird und eine Risiko der Verwechslung der zu montierenden Einzelteile reduziert wird.

Vorteilhafterweise kann der Schaumstoff eingerichtet sein, bei der Beschichtung eine Klebeverbindung mit der Rückseite der Innenverkleidung auszubilden, wenn die Beschichtung auf der Rückseite der Innenverkleidung erfolgt. Alternativ kann der Schaumstoff eine Klebeverbindung mit der Innenwand ausbilden, wenn die Beschichtung auf der Innenseite der Fahrzeugwand erfolgt. Dazu kann der Schaumstoff auf einer Seite eine Klebeverbindung aufweisen, die insbesondere dadurch gebildet wird, dass der Schaumstoff flüssig auf die jeweilige Oberfläche aufgetragen wird und dann aufschäumt. Dazu kann der flüssige Schaumstoff einen Haftvermittler aufweisen, der so eingerichtet ist, dass der Schaumstoff eine Adhäsion von mehr als 90 %, vorteilhafterweise von mehr als 95 %, mit der jeweiligen Oberfläche ausbildet. Bevorzugt umfasst das Verfahren keinen Schritt, bei dem vor dem Beschichten mit dem Schaumstoff ein Haftverstärker, auch Primer genannt, auf die Rückseite der Innenverkleidung bzw. auf die Innenseite der Fahrzeugwand aufgetragen wird. Ein solcher zusätzlicher Schritt kann vorteilhaft vermieden werden, indem der Schaumstoff bereits so eingerichtet ist, eine Klebeverbindung mit der Rückseite der Innenverkleidung bzw. mit der Innenwand auszubilden.

Vorteilhafterweise kann der Schaumstoff mittels lokaler Verformbarkeit eingerichtet sein, den Zwischenraum zwischen der Teilfläche der Rückseite der im Fahrzeug montierten Innenverkleidung und der Innenseite der Fahrzeugwand vollständig zu füllen. Durch die lokale Verformbarkeit des Schaumstoffs kann eine vollständige Füllung der Teilfläche der Rückseite der Innenverkleidung auch an solchen Zwischenräumen zwischen der Teilfläche der Rückseite der Innenverkleidung und der Innenseite der Fahrzeugwand gebildet werden, an denen die räumliche Kontur der Innenverkleidung nicht vollständig der räumlichen Kontur der Innenseite der Fahrzeugwand angepasst ist, bzw. der räumlichen Kontur der Innenseite der Fahrzeugwand folgt. Insbesondere kann der Schaumstoff für die lokale Verformbarkeit elastisch, besonders vorteilhafterweise, dauerelastisch, ausgebildet sein. Alternativ oder zusätzlich, kann der Schaumstoff innerhalb eines Zeitbereichs nach einer Beschichtung mit flüssigem Schaumstoff montiert werden, der durch ein Zeit-Intervall für eine Härtung des Schaumstoffs, und/oder einer Expansionszeit des Schaumstoffs definiert ist, um lokal verformbar zu sein.

Insbesondere kann der Schaumstoff ein Raumgewicht kleiner als 30 kg/Kubikmeter aufweisen. Vorteilhafterweise kann der Schaumstoff ein Raumgewicht zwischen 8 und 12 kg/Kubikmeter aufweisen. Besonders vorteilhafter Weise kann der Schaumstoff ein Raumgewicht zwischen 6 und 15 kg/Kubikmeter aufweisen. Diese Raumgewichte beziehen sich auf den vollständig expandierten Schaumstoff, insbesondere auf den Zustand vor der Montage. Ein geringes Raumgewicht bedeutet eine größere Weichheit bzw. Elastizität des Schaumstoffs und erleichtert somit eine Montage der Innenverkleidung an der Innenseite der Fahrzeugwand. Insbesondere bedingt das geringe Raumgewicht eine lokale Verformbarkeit des Schaumstoffs und dadurch können Toleranzen in Dimensionen des Zwischenraums ausgeglichen werden. Da ein geringes Raumgewicht eine geringere thermische Isolation bedingt, kann der Schaumstoff so eingerichtet sein, dass eine untere Grenze für das Raumgewicht eine ausreichend hohe Elastizität für die Montage aufweist, um insbesondere eine möglichst hohe thermische Isolation zu erreichen.

Der Schaumstoff kann geschlossenzellig strukturiert sein, um insbesondere möglichst wenig Wasser aufzunehmen. Besonders vorteilhafterweise kann der Schaumstoff offenzellig strukturiert sein, um insbesondere für Gase durchlässig zu sein. Alternativ oder zusätzlich, kann der offenzellige Schaumstoff für Wasserdampf diffusionsoffen eingerichtet sein. Alternativ oder zusätzlich, kann der Schaumstoff, mittels zusätzlicher Additive beim Vermischen der Schaumstoffkomponenten für den offenzelligen Schaumstoff, eingerichtet sein, nur eine geringe Menge Wasser, insbesondere im Vergleich mit anderen typischen offenzelligen Schaumstoffen, aufzunehmen. Vorteilhafterweise kann der offenzellige Schaumstoff eine Bildung von Wasserkondensat vermeiden, da das Wasser durch die offenzellige Struktur des Schaumstoffs entweichen kann. Dies verbessert das Raumklima im Fahrzeug.

Entsprechend einem Aspekt wird vorgeschlagen, dass der Schaumstoff einen Wärmedurchlasswiderstand größer als 10 m²·K/W, vorzugsweise größer 20 m²·K/W, aufweist. Der Wärmedurchlasswiderstand R beschreibt die Wärmedämmwirkung einer Bauteilschicht. Der R-Wert kann als ein Quotient aus einer Dicke d und einem Bemessungswert einer Wärmeleitfähigkeit eines Bauteiles definiert werden. Mittels des relativ hohen Wärmedurchlass des Schaumstoffs kann eine gute thermische Isolation des Fahrzeugs mit einer relativ dünnen Schaumstoffschicht erreicht werden.

Die Schichtdicke des Schaumstoffs vor der Montage kann in einem Bereich von 5 mm bis 30 mm liegen. Vorzugsweise kann die Schichtdicke des Schaumstoffs vor der Montage in einem Bereich von 10 mm bis 20 mm liegen. Die benötigte Schichtdicke kann durch ein Bestimmen eines vorgesehenen Abstands der Rückseite der Innenverkleidung von der Innenseite der Fahrzeugwand unter Berücksichtigung von Toleranzen, insbesondere der räumlichen Kontur der Innenverkleidung und/oder Toleranzen der räumlichen Kontur der Innenseite der Fahrzeugwand bestimmt werden. Zusätzlich oder alternativ, kann die Dicke des Schaumstoffs vor der Montage durch eine Anforderung an eine thermische Isolation bestimmt werden. Insbesondere wenn die Dicke des Schaumstoffs auf der Rückseite der Innenverkleidung variiert, kann die Dicke des Schaumstoffs auch doppelt oder dreimal so groß sein.

Die Beschichtung die Innenseite der Fahrzeugwand und/oder der Rückseite der Innenverkleidung mit dem Schaumstoff kann maschinell, beispielsweise mittels eines Roboters erfolgen. Für die Beschichtung der Innenseite der Fahrzeugwand kann der Roboter, beispielsweise über eine Heckklappe, den Innenraum des Fahrzeugs erreichen und/oder im Innenraum des Fahrzeugs für die Beschichtung platziert sein.

Die Beschichtung der Innenseite mittels eines Roboters vereinfacht einen Personenschutz während der Beschichtung, da die Beschichtung mit dem fließfähigen Schaumstoff gesundheitsschädliche Gase freisetzen kann.

Die Rückseite der Innenverkleidung und/oder die Innenseite der Fahrzeugwand kann mit dem Schaumstoff beschichtet werden, indem der Schaumstoff in flüssiger Form auf die Rückseite und/oder die Innenwand aufgetragen wird und der Schaumstoff während und/oder nach dem Beschichten aufgeschäumt wird. Dazu kann der Schaumstoff zwei Hauptkomponenten umfassen, die während des Auftragens miteinander gemischt werden, wobei die zwei Hauptkomponenten eingerichtet sind zu interagieren, um nach der Vermischung aufzuschäumen. Der flüssige Schaumstoff kann eingerichtet sein, an der aufgebrachte Oberfläche zu haften und direkt nach dem Beschichten aufzuschäumen, um einen Verbund mit der Oberfläche zu erreichen. Durch die Verwendung von einem 2K-Schaumstoff für die thermische Isolierung des Fahrzeugs können die Materialkosten für die thermische Isolierung insbesondere im Vergleich mit den oben beschriebenen Stanzteilen deutlich reduziert werden. Durch die Verwendung des Schaumstoffs für die thermische Isolierung kann gleichzeitig eine schallabsorbieren Wirkung für den Innenraum des Fahrzeugs erreicht werden.

Vorteilhafterweise kann der Schaumstoff mittels eines Polyurethansystems bei dem Beschichten gebildet werden, wobei insbesondere das Polyurethansystem eine erste Hauptkomponente und eine zweite Hauptkomponente aufweist, und zumindest die zwei Hauptkomponenten interagieren, um den Schaumstoff zu bilden, und insbesondere den Schaumstoff aufschäumen. Dabei kann das Bilden des Schaumstoffs insbesondere ein aufschäumen des Schaumstoffs betreffen. Das Polyurethansystem kann darüber hinaus Additive aufweisen, die eine Wasseraufnahme des Schaumstoffs und/oder eine Härte des Schaumstoffs und/oder eine Klebekraft des Schaumstoffs und/oder eine Adhäsion des flüssigen Schaumstoffs und/oder eine brandhemmende Eigenschaft für die Anwendung und/oder für die Montage optimieren. Das Polyurethansystem kann eingerichtet sein, den Schaumstoff innerhalb von 5 Minuten zu bilden. Vorteilhafterweise kann das Polyurethansystem eingerichtet sein, den Schaumstoff in einem Zeitbereich unterhalb 1 Minute zu bilden. Für die Beschichtung kann der flüssige Schaumstoff temperiert werden und mittels eines Dosierkopfs und einer Pumpe auf die jeweilige Oberfläche aufgetragen werden.

Besonders vorteilhafterweise kann die erste Hauptkomponente eine Polyhydroxy-Verbindung (Polyol), insbesondere in aktiver Form, sein oder beinhalten, und die zweite Hauptkomponente kann ein Isocyanat sein oder beinhalten. Das Verhältnis von Polyol zu Isocynat liegt vorzugsweise zwischen 1:3 und 3:1, stärker bevorzugt zwischen 1:2 und 2:1. Wenn die Polyhydroxy-Verbindung in aktiver Form für den Schaumstoff verwendet wird, ist insbesondere keine Luftfeuchtigkeit für eine Auswertung des Schaumstoffs notwendig. Weitere Komponenten können z.B. Beschleuniger oder Verzögerer sein, welche das Aufschäumen und Aushärten des Schaustoffs beschleunigen bzw. verzögern. Durch ein schnelles Aushärten des Schaumstoffs kann die rückseitige Beschichtung der Innenverkleidung verbessert werde, da die strukturierte Rückseite der Innenverkleidung dann mit dem fließfähigen Schaumstoff gleichmäßig beschichtet werden kann. Alternativ oder zusätzlich können Additive, wie z.B. ATH (Aluminium-Tri-Hydroxid) der Mischung der Komponenten zugegeben werden, um eine Brandhemmung des Schaumstoffs zu erreichen.

In einer Ausführungsform kann die Innenverkleidung nach Ablauf einer Expansionszeit des aufgeschäumten Schaumstoffs montiert werden. Dadurch kann die Rückseite der Innenverkleidung mit dem aufgeschäumten Schaumstoff für eine Montage an der Innenseite der Fahrzeugwand vorbereitet gelagert werden, um den Produktionsprozess des Isolierens der Innenseite der Fahrzeugwand zu beschleunigen. Dazu kann der Schaumstoff eingerichtet sein, nach Ablauf der Expansionszeit an seiner freien Oberfläche nicht mehr zu kleben, sodass eine Montage vereinfacht wird. Gegebenenfalls kann der Schaumstoff, der auf die Rückseite der Innenverkleidung aufgebracht ist, mit der Innenseite der Fahrzeugwand verklebt werden. Alternativ oder zusätzlich, kann der Schaumstoff mit der Rückseite der Innenverkleidung verklebt werden, wenn der Schaumstoff auf die Innenseite der Fahrzeugwand aufgebracht wurde.

Gemäß einem Aspekt wird vorgeschlagen, dass der Schaumstoff lokal elastisch verformbar ist, um den Zwischenraum zwischen der Teilfläche der Rückseite der montierten Innenverkleidung und der Innenseite der Fahrzeugwand vollständig zu füllen. Dadurch kann der Zwischenraum vollständig gefüllt werden, auch wenn Toleranzen der räumlichen Kontur der Innenverkleidung und/oder der räumlichen Kontur der Innenseite der Fahrzeugwand auftreten. Dies ist insbesondere vorteilhaft, wenn die Innenverkleidung nach Ablauf einer Expansionszeit des aufgeschäumten Schaumstoffs montiert wird, da dann die Elastizität des (fertigen) Schaumstoffs entscheidend ist.

In einer alternativen Ausführungsform kann die Innenverkleidung vor Ablauf einer Expansionszeit des aufgeschäumten Schaumstoffs montiert werden. Auch dadurch kann erreicht werden, dass der Schaumstoff lokal plastisch verformbar ist. Insbesondere kann die lokale plastische Verformbarkeit dadurch erreicht werden, dass der Schaumstoff erst nach und/oder während der Montage aushärtet, bzw. expandiert, um den Zwischenraum zwischen der montierten Innenverkleidung und dem Teilbereich der Rückseitenfläche der Innenverkleidung vollständig zu füllen. In diesem Fall kann der Schaumstoff eingerichtet sein, innerhalb einer Zeit von mehr als einer halben Stunde, vorzugsweise mehr als einer Stunde, auszuhärten, um eine ausreichende Zeit für die Montage bereitzustellen. In anderen Worten ist der Schaumstoff vorzugsweise dazu eingerichtet, innerhalb der ersten halben Stunde nach dem Auftragen, vorzugsweise innerhalb der ersten Stunde nach dem Auftragen, noch nicht vollständig expandiert und/oder ausgehärtet zu sein. Darüber hinaus kann der Schaumstoff dazu eingerichtet sein, während der Aushärtung an der Oberfläche nicht mehr zu kleben.

Gemäß einem weiteren Aspekt wird eine Innenverkleidung für ein Freizeitfahrzeugs vorgeschlagen, wobei zumindest ein Teilbereich einer räumlichen Kontur der Innenverkleidung einer räumlichen Kontur der Innenseite der Fahrzeugwand des Freizeitfahrzeugs angepasst ist. Dabei ist eine Rückseite der Innenverkleidung mit einem elastischen Schaumstoff beschichtet. Und der elastische Schaumstoff kann eingerichtet sein, einen Zwischenraum zwischen einer Teilfläche der Rückseite der Innenverkleidung und der Innenseite der Fahrzeugwand vollständig zu füllen, um insbesondere mittels des Schaumstoffs Formtoleranzen der Innenverkleidung; und/oder Formtoleranzen der Innenwand, auszugleichen.

Insbesondere kann die räumliche Kontur der Innenverkleidung der räumlichen Kontur der Innenseite der Fahrzeugwand vollständig, d. h. über den ganzen Bereich der räumlichen Kontur der Innenverkleidung, der räumlichen Kontur der Innenseite der Fahrzeugwand angepasst sein, sodass besonders vorzugsweise die räumliche Kontur der Innenverkleidung parallel zu einer räumlichen Kontur der Innenverkleidung, entsprechend einer Spezifikation, ausgebildet ist.

Gemäß einem Aspekt wird vorgeschlagen, dass diese Innenverkleidung mit einem der oben beschriebenen Verfahren zur thermischen Isolation einer Wand hergestellt wird. Insbesondere kann die Innenverkleidung des Freizeitfahrzeugs die in Bezug auf das Verfahren beschriebenen Merkmale aufweisen.

Gemäß einem weiteren Aspekt ist die Erfindung auf ein Freizeitfahrzeug mit einer thermischen Isolierung gerichtet, die mit dem erfindungsgemäßen Verfahren hergestellt ist. Unter einem Freizeitfahrzeug wird hier ein Kraftfahrzeug oder ein Anhänger mit einem Wohnbereich verstanden. Insbesondere kann das Freizeitfahrzeug ein Camper Van, ein Urban Vehicle, ein Kastenwagen oder ein Wohnwagen oder Wohnmobil sein.

Gemäß einem Aspekt wird eine Verwendung eines Polyurethansystems zum Aufschäumen eines elastischen Schaumstoffs bei einem Beschichten einer Rückseite einer Innenverkleidung vorgeschlagen, um ein Fahrzeug thermisch zu isolieren. Alle Merkmale und Vorteile, die in Bezug auf das erfindungsgemäße Verfahren vorgeschlagen wurden, gelten auch für die Verwendung und das Freizeitfahrzeug und umgekehrt.

Im Folgenden wird die vorliegende Erfindung anhand einiger Ausführungsformen und den beigefügten Zeichnungen im Detail beschrieben:

Dabei zeigt:
- Fig. 1: ein Flussdiagramm des Verfahrens zur thermischen Isolation einer Wand;
- Fig. 2: einen schematischen Querschnitt durch eine Innenverkleidung für eine Innenwand eines Freizeitfahrzeugs;
- Fig. 3: eine isometrische Darstellung einer Innenverkleidung, die eine räumliche Kontur aufweist;
- Fig. 4: eine isometrische Darstellung einer Innenwand eines Kastenwagens.

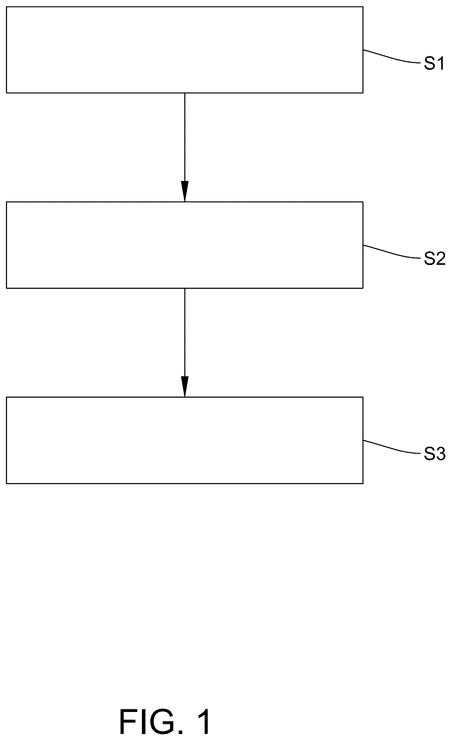

Die Figur 1 skizziert schematisch ein Verfahren zur thermischen Isolation einer Wand, insbesondere eines Freizeitfahrzeugs, welches die folgenden Schritte aufweist.

In einem Schritt S1 wird eine Innenverkleidung für eine Innenseite der Fahrzeugwand bereitgestellt, wobei ein Teilbereich einer räumlichen Kontur der Innenverkleidung einer räumlichen Kontur der Innenseite der Fahrzeugwand angepasst ist.

In einem weiteren Schritt S2 wird zumindest ein Teil einer Rückseite der Innenverkleidung und/oder zumindest ein Teil der Innenwand mit einem Schaumstoff beschichtet.

In einem weiteren Schritt S3 wird die Innenverkleidung an der Innenseite der Fahrzeugwand montiert, wobei insbesondere ein Zwischenraum zwischen einer Teilfläche der Rückseite der Innenverkleidung und der, insbesondere korrespondierend geformten, Innenseite der Fahrzeugwand mit dem Schaumstoff vollständig gefüllt ist, um insbesondere mittels des Schaumstoffs Formtoleranzen der Innenverkleidung; und/oder Formtoleranzen der Innenwand, auszugleichen.

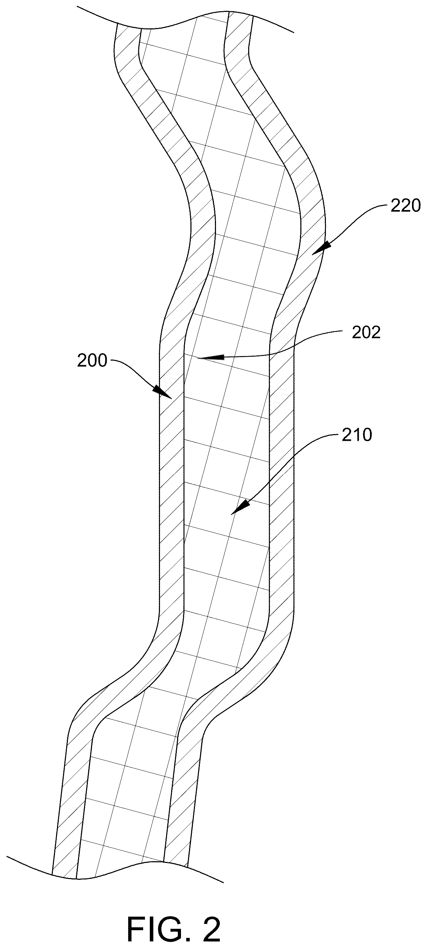

Die Figur 2 skizziert schematisch einen Querschnitt durch eine Innenverkleidung 200 für eine Innenseite der Fahrzeugwand 220 eines Freizeitfahrzeugs, die an der Innenseite der Fahrzeugwand 220 angeordnet ist. Zumindest ein Teilbereich einer räumlichen Kontur der Innenverkleidung 200 ist einer räumlichen Kontur der Innenseite der Fahrzeugwand 220 des Freizeitfahrzeugs angepasst. Eine Rückseite 202 der Innenverkleidung 200 ist mit einem elastischen Schaumstoff 210 beschichtet. Dabei ist der elastische Schaumstoff 210 eingerichtet, einen Zwischenraum zwischen zumindest einer Teilfläche der Rückseite 202 der Innenverkleidung 200 und der Innenseite der Fahrzeugwand 220 des Freizeitfahrzeugs vollständig zu füllen, um insbesondere mittels des Schaumstoffs 210 Formtoleranzen der Innenverkleidung 200 und/oder Formtoleranzen der Innenseite der Fahrzeugwand 220, auszugleichen und/oder Elemente, die aus einer Konturierung der Innenseite der Fahrzeugwand 220 hervorragen, wie z. B. Schrauben, zu kompensieren oder zu umfassen. Dabei kann die Innenverkleidung 200 einen thermoplastischen Kunststoff aufweisen, der insbesondere ABS ist.

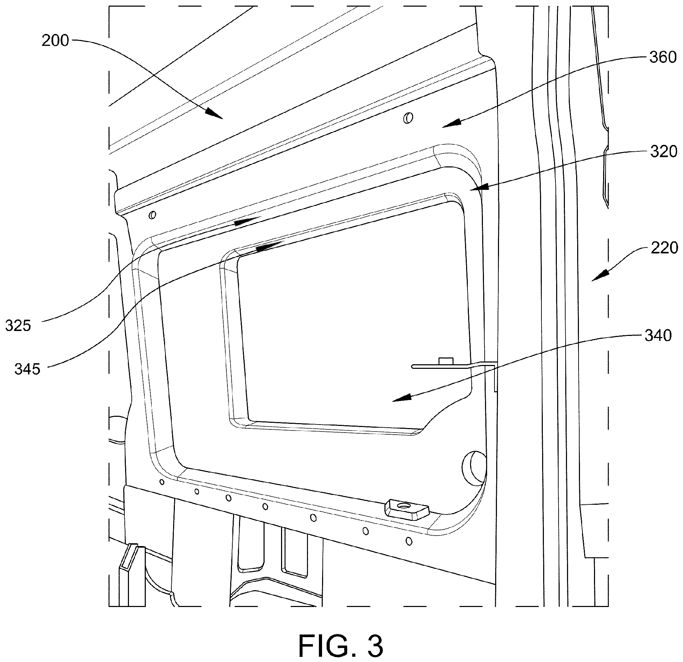

Die Figur 3 skizziert schematisch eine isometrische Darstellung einer Innenverkleidung 200, die auf einer zum Innenraum des Fahrzeugs gerichteten Seite eine räumliche Kontur mit beispielhaften ebenen Flächen 320, 340, 360 auf unterschiedlichen Niveaus aufweist, wobei die ebenen Flächen 320, 340, 360 mit Flanken 325, 345 miteinander zu einem Werkstück verbunden sind. Diese räumliche Kontur kann im Wesentlichen der räumlichen Kontur auf der Rückseite 202 der Innenverkleidung entsprechen, insbesondere wenn die Innenverkleidung 200 eine einheitliche Materialstärke aufweist.

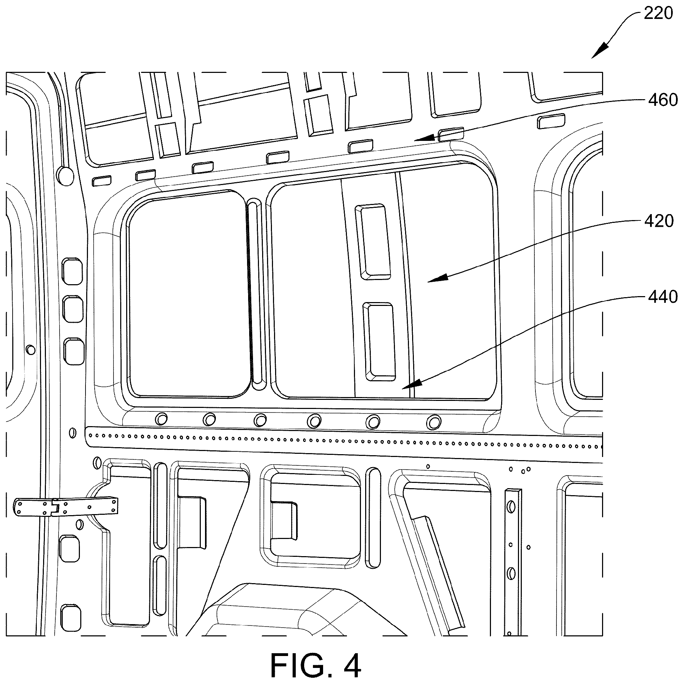

Die Figur 4 skizziert schematisch eine isometrische Darstellung einer beispielhaften Innenseite der Fahrzeugwand 220 eines Fahrzeuges, wie eines Kastenwagens. Eine in das Freizeitfahrzeug gerichtete Innenseite der Fahrzeugwand 220 weist auf einem Kraftfahrzeugblech 420 geformte Blechkonstruktionen 440, 460 als Träger oder Streben, bzw. Holme oder Traversen, auf, die von der Innenseite mit dem Kraftfahrzeugblech 420 mechanisch gekoppelt sind, um insbesondere die Stabilität des Aufbaus, bzw. des Laderaums zu verbessern. Dabei können die Blechkonstruktionen 440, 460 zusammen mit dem Kraftfahrzeugblech 420 eine räumliche Kontur der Innenseite der Fahrzeugwand 220 des Fahrzeugs ausbilden.

### Bezugszeichenliste

- S1, S2, S3: Schritte des Verfahrens
- 200: Innenverkleidung
- 202: Rückseite der Innenverkleidung
- 210: Schaumstoff
- 220: Fahrzeugwand
- 320, 340, 360: ebenen Fläche
- 325, 345: Flanke
- 420: Kraftfahrzeugblech
- 440, 460: geformte Blechkonstruktionen

## Patentansprüche

1. Verfahren zur thermischen Isolation einer Wand (220), insbesondere eines Freizeitfahrzeugs, aufweisend:
Bereitstellen einer Innenverkleidung (200) für eine Innenseite einer Fahrzeugwand (220) (S1), wobei ein Teilbereich einer räumlichen Kontur der Innenverkleidung (200) einer räumlichen Kontur der Innenseite der Fahrzeugwand (220) angepasst ist;
Beschichten zumindest eines Teils einer Rückseite (202) der Innenverkleidung (200) und/oder zumindest eines Teils der Innenseite der Fahrzeugwand (220) mit einem Schaumstoff (210) (S2), wobei das Beschichten durch Auftragen des Schaumstoffs in fließfähigem Zustand erfolgt, und wobei der Schaumstoff insbesondere aus zwei Komponenten gebildet wird; und
Montieren der Innenverkleidung (200) an der Innenseite der Fahrzeugwand (220) (S3), wobei insbesondere ein Zwischenraum zwischen zumindest einer Teilfläche der Rückseite der Innenverkleidung (202) und der Innenseite der Fahrzeugwand (220) mit dem Schaumstoff (210) vollständig gefüllt ist.

2. Verfahren gemäß Anspruch 1, wobei der Schaumstoff dazu ausgelegt ist, Formtoleranzen der Innenverkleidung (200) und/oder Formtoleranzen der Innenseite der Fahrzeugwand (220) und/oder Toleranzen der Dicke der Schaumstoffbeschichtung auszugleichen.

3. Verfahren gemäß Anspruch 1 oder 2, wobei der Schaumstoff (210) eingerichtet ist, bei der Beschichtung eine Klebeverbindung mit der Rückseite der Innenverkleidung (202) und/oder eine Klebeverbindung mit der Innenseite der Fahrzeugwand (220) auszubilden.

4. Verfahren gemäß einem der vorangehenden Ansprüche, wobei der Schaumstoff (210) mittels lokaler Verformbarkeit eingerichtet ist, den Zwischenraum zwischen der Teilfläche der Rückseite (202) der im Fahrzeug montierten Innenverkleidung und der Innenseite der Fahrzeugwand (220) vollständig zu füllen.

5. Verfahren gemäß einem der vorangehenden Ansprüche, wobei der Schaumstoff (210) offenzellig strukturiert ist; und/oder wobei der Schaumstoff (210) eingerichtet ist, für Wasserdampf diffusionsoffen zu sein; und/oder wobei der Schaumstoff (210) für eine geringe Wasseraufnahme eingerichtet ist.

6. Verfahren gemäß einem der vorangehenden Ansprüche, wobei der Schaumstoff (210) einen Wärmedurchlasswiderstand größer als 10 m²·K/W, vorzugsweise größer 20 m²·K/W, aufweist, und/oder wobei die Schichtdicke des Schaumstoffs (210) zwischen 5 mm und 30 mm, vorzugsweise zwischen 10 mm und 20 mm, beträgt.

7. Verfahren gemäß einem der vorangehenden Ansprüche, wobei der Schaumstoff (210) ein Raumgewicht kleiner als 30 kg/Kubikmeter, vorzugsweise ein Raumgewicht zwischen 8 und 12 kg/Kubikmeter, besonders vorzugsweise ein Raumgewicht zwischen 6 und 15 kg/Kubikmeter aufweist.

8. Verfahren gemäß einem der vorangehenden Ansprüche, wobei die Innenseite der Fahrzeugwand (220) und/oder die Rückseite der Innenverkleidung (202) maschinell mit dem Schaumstoff (210) beschichtet wird.

9. Verfahren gemäß einem der vorangehenden Ansprüche, wobei der Schaumstoff während des Beschichtens der Rückseite der Innenverkleidung (202) und/oder des Beschichtens der Innenwand (220) aufgeschäumt wird, und wobei die Innenverkleidung vor Ablauf einer Expansionszeit des aufgeschäumten Schaumstoffs (210) montiert wird.

10. Verfahren gemäß einem der vorangehenden Ansprüche, wobei der Schaumstoff (210) lokal elastisch verformbar ist, um den Zwischenraum zwischen der Teilfläche der Rückseite (202) der montierten Innenverkleidung und der Innenwand (220) des Fahrzeugs vollständig zu füllen und/oder um Toleranzen in Dimensionen des Zwischenraums auszugleichen.

11. Verfahren gemäß einem der vorangehenden Ansprüche, wobei der Schaumstoff (210) mittels eines Polyurethansystems bei dem Beschichten gebildet wird, wobei insbesondere das Polyurethansystem eine erste Hauptkomponente und eine zweite Hauptkomponente aufweist, und zumindest die zwei Hauptkomponenten interagieren, um den Schaumstoff (210) zu bilden.

12. Verfahren gemäß Anspruch 12, wobei die erste Hauptkomponente eine Polyhydroxy-Verbindung (Polyol) in aktiver Form aufweist; und die zweite Hauptkomponente Isocyanate aufweist.

13. Innenverkleidung (200) für eine Innenwand (220) eines Freizeitfahrzeugs, wobei zumindest ein Teilbereich einer räumlichen Kontur der Innenverkleidung (200) einer räumlichen Kontur der Innenwand des Freizeitfahrzeugs (220) angepasst ist, und wobei eine Rückseite der Innenverkleidung (202) mit einem elastischen Schaumstoff (210) beschichtet ist, und wobei der elastische Schaumstoff (210) insbesondere eingerichtet ist, einen Zwischenraum zwischen einer Teilfläche der Rückseite der Innenverkleidung (202) und der Innenwand des Freizeitfahrzeugs (220) vollständig zu füllen, um insbesondere mittels des Schaumstoffs (210) Formtoleranzen der Innenverkleidung (200) und/oder Formtoleranzen der Innenwand (220), auszugleichen.

14. Freizeitfahrzeug mit einer thermisch isolierten Wand, hergestellt mit dem Verfahren nach einem der Ansprüche 1 bis 12.

15. Verwendung eines Polyurethansystems zum Aufschäumen eines elastischen Schaumstoffs (210) bei einem Beschichten einer Rückseite einer Innenverkleidung (202), um ein Fahrzeug thermisch zu isolieren.
